# EUROPEAN PATENT SPECIFICATION

(11) **EP 2 850 945 B1**
(45) Date of publication and mention of the grant of the patent: **27.03.2019**
(21) Application number: 14178710.1
(22) Date of filing: 28.07.2014
(51) Int. Cl.: A21B 1/02, A21B 1/40

(54) **A PELLET BURNING OVEN FOR COOKING FOOD AND METHOD FOR CONTROLLING SUCH AN OVEN**
MIT PELLETS BETRIEBENER BACKOFEN UND VERFAHREN ZUM BETRIEB EINES SOLCHEN BACKOFENS
FOUR DE CUISSON ALIMENTÉ EN GRANULÉS ET PROCÉDÉ D'OPÉRATION D'UN TEL FOUR

(30) Priority: 29.07.2013 IT VR20130181
(43) Date of publication of application: 25.03.2015
(73) Proprietor: ING. POLIN & C. S.p.A., 37135 Verona (IT)
(72) Inventor: Cometti, Cesare, 37135 Verona (IT)
(74) Representative: Lissandrini, Marco

(56) References cited:
- DE-A1- 10 027 299
- DE-A1-102009 011 625
- US-A- 1 664 443
- US-A1- 2005 236 394

## Description

This invention relates to a pellet burning oven for cooking and a method for controlling a pellet burning oven.

More specifically, this invention relates to ovens with a burner for pellets. The term "pellet" refers to the compressed wooden pieces which are used as fuel.

Preferably, this invention relates to the sector of rotary ovens which comprise a rotatable carriage positioned inside a cooking chamber. The rotatable carriage rotates, during use of the oven, about its own axis vertical, in such a way as to uniformly heat the products placed on the carriage. It should be noted that the rotary ovens are usually used in the bread and pastry making industries since the products belonging to these sectors require certain coking conditions.

More specifically, an oven made according to the prior art comprises a frame which defines internally a cooking chamber and a heating chamber at least partly separated by a dividing wall 3. Moreover, the oven comprises a pellet burner positioned in the heating chamber to generate heat. In detail, the burner is configurable at least between a switched off state and an active state.

Naturally, the oven comprises a tank for pellets connected to the burner for feeding the pellets to the burner.

Moreover, the oven comprises a fan operatively associated with the heating chamber for creating a flow of hot air from the heating chamber towards the cooking chamber in such a way as to heat the food. Normally, the burner and the fan are positioned in separate compartments inside the heating chamber. In other words, the heating chamber defines a zone for heat exchange between the heat produced by the burner and the air moved by the fan.

Moreover, the cooking chamber has an open side where there is a door movable between an open position, in which the cooking chamber is in fluid communication with the outside, and a closed position. Obviously, during the open position it is possible to introduce the food inside the cooking chamber.

In addition, there is a unit for controlling the burner operatively connected to the burner for controlling it between one state and the another. More specifically, the control unit comprises an external interface by which the user can enter a temperature value to be reached.

Moreover, the oven comprises means for measuring the temperature of the cooking chamber operatively connected to the control unit for transmitting to the latter the information relative to the instantaneous temperature measured.

In that way, the control unit is configured to perform the following operations:
configuring the burner in the active condition (switching it on);
comparing the measured temperature value with the temperature value preset by a user;
keeping the heat generating means (7) in the active condition at least until the temperature value preset by the user is reached.

More specifically, before placing the food in the cooking chamber, it is necessary to heat the cooking chamber to the temperature preset by the user in such a way as to place the food in the oven once the cooking chamber is heated to the preset temperature. However, during the operations for placing the food in the oven, there is a temperature drop inside the cooking chamber linked to the fact that it is necessary to keep the door open for a certain length of time and to the fact that the carriage, the trays and the products to be cooked have a respective temperature considerably lower than the cooking temperature (in other words, carriage, trays and products together form a "cool" body relative to the inside environment of the cooking chamber). More specifically, in the case of rotary type ovens, the length of time can become considerable due to the fact that the carriage and the heating chamber are large and, consequently, the opening area of the door must also be suitable for these dimensions.

For this reason, when placing the food in the oven, the time during which the door is kept open and the volumes of air subject to heat exchange between heating chamber and outside environment are considerable.

Consequently, a cooking temperature is usually set which is greater than that optimum temperature for a certain type of food in such a way as to compensate, at least partly, for the loss of heat linked to the opening of the door.

It should also be noted that the means for circulating hot air are switched off during the opening of the door to ensure the safety of the user performing the operations.

In any case, the tendency is usually to increase considerably the preset temperature with respect to the optimum cooking temperature in such a way as to minimise the heat losses.

However, it is not possible to increase the preset temperature too much since:
- the structures inside the cooking and combustion chambers would be adversely affected;
- when the door is opened the temperature inside the cooking chamber (even if the means for circulating air are switched off) is very high and dangerous for the user.
- the food would be adversely affected after it is placed in the oven.

For this reason, it is necessary to preset a temperature which is as high as possible (with respect to the specific situation) but not that high that there would be the risk of the above-mentioned problems.

In other words, it is important that the temperature of the oven remains around the preset temperature.

However, the pellet burner has thermal inertias which are linked considerably to the fact that the flame (and the heat produced by combustion) takes a certain length of time before burning at a steady state and, in the same way, it takes a certain period of time before switching off completely. More in detail, the time inertias are linked to the fact that the fuel is substantially wood and requires time to reach the steady burning state.

For this reason, the problem of controlling the preset temperature is amplified in the case in which the fuel consists of pellets. An example of an oven according to the known prior art is disclosed in document DE102009011625.

In this situation, the aim of this invention is to provide a pellet burning oven which overcomes the above mentioned drawbacks.

More specifically, the aim of this invention is to provide a pellet burning oven which allows the control of the cooking chamber temperature to be optimised before opening the oven door.

Another aim of this invention is to provide a pellet burning oven which allows the thermal inertias linked to the pellets to be opposed in the case of temperature drops linked to the opening of the oven door and the introduction into the cooking chamber of items with a temperature lower than the cooking temperature.

The above-mentioned aims are substantially achieved by a pellet burning oven for cooking food as described in the accompanying claims.

Further characteristic features and advantages of this invention will emerge more clearly from the detailed description of several preferred, but not exclusive embodiments of a pellet burning oven for cooking food illustrated in the accompanying drawings, in which:
- Figure 1 shows a schematic top view of a pellet burning oven according to this invention;
- Figure 2 shows a schematic view of a block diagram of the system for controlling the pellet burning oven of Figure 1; and
- Figure 3 shows a schematic view of a graph of the temperature trend inside the cooking chamber linked to the opening of the door to place food in the oven.

With reference to the above mentioned drawings, the numeral 1 denotes in its entirety a pellet burning oven for cooking food according to the invention.

More specifically, the oven 1 comprises a frame 2 forming internally a space. More specifically, the frame 2 comprises an external containment structure in which the space is defined. Moreover, the frame 2 comprises a dividing wall 3 located inside the space for dividing it into a chamber 4 for cooking foods and a heating chamber 5. It should be noted that the cooking chamber 4 is the space in which the food to be cooked is placed, whilst the heating chamber 5 is the space assigned for generating heat.

In addition, the dividing wall 3 has openings 6a, 6b that put in fluid communication the cooking chamber 4 with the heating chamber 5 in such a way as to allow the passage of heat from the heating chamber 5 to the cooking chamber 4.

Moreover, the cooking chamber 4 has an open side 19 where there is a door 20 movable between an open position, in which the cooking chamber 4 is in fluid communication with the outside, and a closed position. Obviously, during the open position it is possible to introduce the food inside the cooking chamber 4.

Moreover, the oven 1 comprises heat generating means 7 of the pellet type positioned in the heating chamber 5 to generate heat. More specifically, the heat generating means 7 comprise a pellet burner 8 and a unit 9 for feeding the pellets. More specifically, the oven 1 comprises a tank 10 for containing the pellets 11 and the unit 9 for feeding the pellets 11 is positioned between the tank 10 and the burner 8 to feed the pellets 11 to the latter.

It should be noted that the burner 8 is normally positioned in its combustion compartment 5a which is in turn positioned inside the heating chamber 5. More specifically, the oven 1 comprises a heat exchanger positioned inside the heating chamber 5 and operatively connected with the burner 8 to introduce heat in the heating chamber 5. In other words, the combustion compartment 5a exchanges heat with the heating chamber 5 in such a way to introduce heat in the heating chamber 5.

Moreover, the oven 1 comprises means 12 for causing hot air circulation operatively associated with the heating chamber 5 for producing a hot air flow from the heating chamber 5 towards the cooking chamber 4 for heating the food. More specifically, the means 12 for circulating hot air comprise a motor and a fan. In practice, the flow of air for the cooking is heated thanks to the heat exchange with occurs the heat exchanger and then passes through the openings 6a, 6b of the dividing wall 3 and enters the cooking chamber 4. The flow of hot air then passes from the cooking chamber 4 to the heating chamber 5 through the openings 6. More in detail, to avoid interference, some openings 6a are used for the passage of the air from the heating chamber 5 to the cooking chamber 4 and other openings 6b are used to return air from the cooking chamber 4 to the heating chamber 5.

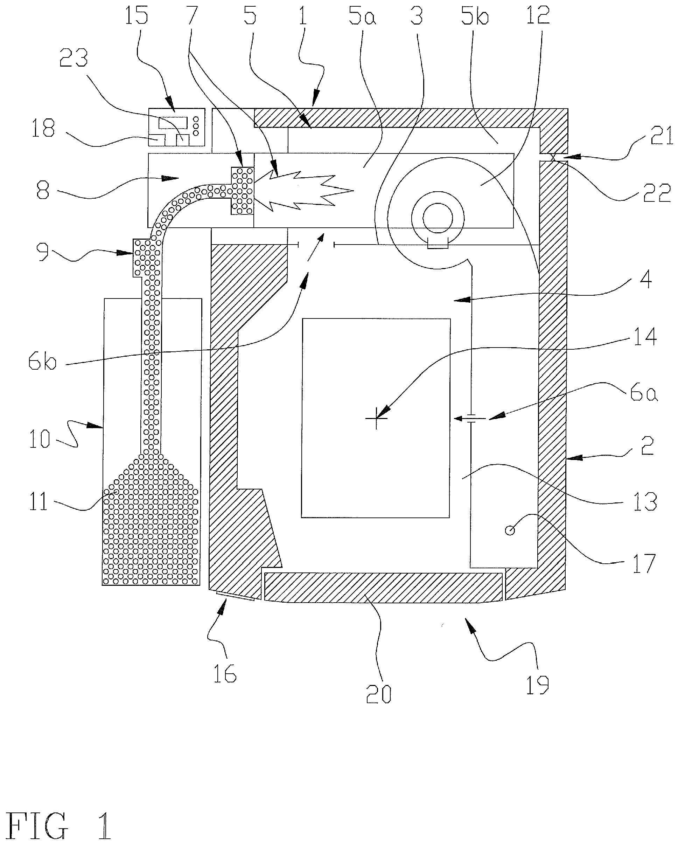

In the preferred embodiment shown in Figure 1, it can be seen that the openings 6a used for the passage of the air from the heating chamber 5 to the cooking chamber 4 are spaced from the openings 6b used to return air from the cooking chamber 4 to the heating chamber 5. More specifically, Figure 1 shows that the openings 6a used for the passage of the air from the heating chamber 5 to the cooking chamber 4 are made at a first side wall of the cooking chamber, whilst the openings 6b used to return the air from the cooking chamber 4 to the heating chamber 5 are positioned at a second side wall which is distinct from the first. In other words, the openings 6a used for the passage of the air from the heating chamber 5 to the cooking chamber 4 and the openings 6b used to return air from the cooking chamber 4 to the heating chamber 5 are positioned in zones diametrically opposite each other. In that way, there is a physical distinction between the circulation of the hot air being fed relative to the hot air being returned.

Preferably, the heating chamber 5 has a combustion compartment 5a in which the burner 8 is positioned and a further compartment 5b, separate from the first compartment 5a, in which the means 12 for circulating hot air are positioned. As already mentioned, the cooking chamber 4 comprises a rotatable carriage on which the foods to be cooked are placed. More specifically, the carriage rotates according to a substantially vertical axis and it is movable so that it can be extracted from the cooking chamber 4 once the food has been heated. For this reason, the cooking chamber 4 is defined below by a lower wall 13 where a pin 14 is positioned. The pin 14 is shaped to be coupled to the carriage once the latter has been introduced into the cooking chamber 4.

In addition, the cooking chamber 4 is defined above by an upper wall (not visible in the accompanying drawings), where there is a motor-driven rotary hook designed to be coupled to the carriage once the latter has been introduced into the cooking chamber 4. More specifically, the hook is aligned with the pin 14 according to an axis extending between the lower wall 13 and the upper wall. As already mentioned, the hook is motor driven and preferably connected to a gear motor.

In an alternative embodiment not illustrated in the accompanying drawings, the hook could be located at the lower wall 13 of the cooking chamber and the pin 14 positioned at the upper wall.

Moreover, the heat generating means 7 are configurable at least between a switched off state in which they do not generate heat and an active state in which they generate heat. As already mentioned, the generation of the heat is a direct consequence of the combustion of the pellets 11. It should be noted that the heat generating means 7 also comprises an element for triggering the combustion, designed to trigger the combustion (for example by means of a spark).

Moreover, the oven 1 comprises a control unit 15 for the heat generating means 7 operatively connected to the heat generating means 7 for switching them between one state and the other; In other words, the control unit 15 is configured for controlling the heat generating means 7 from the switched off state to the active state and vice versa. More specifically, the control unit 15 comprises a control interface 16 accessible to an operator for manually entering certain parameters and for graphically displaying data which is specified in more detail below.

Moreover, the oven 1 comprises means 17 for measuring the temperature of the cooking chamber 4 operatively connected to the control unit 15 for transmitting to the latter the information relative to the instantaneous temperature measured TR. More in detail, the measuring means 17 comprise a temperature sensor positioned inside the cooking chamber 4 to measure the temperature. Preferably, the measuring means 17 measure the temperature in an instantaneous manner. In other words, the temperature measurement is updated regularly at predetermined intervals. Moreover, the control unit 15 is configured to perform a sequence of operations for preheating the cooking chamber 4 in the absence of food. In other words, the control unit 15 is configured to perform a sequence of operations for preheating the cooking chamber 4 before introducing the food. In yet other words, the control unit 15 is configured to perform a sequence of operations for preheating the cooking chamber 4 before opening the door for introducing the food.

More specifically, the sequence of operations comprises an initial cycle of operations and a plurality operations after the initial cycle.

In detail, the control unit 15 is configured for performing the initial cycle, that is, for:
configuring the heat generating means 7 in the active condition (switching on the burner);
comparing the measured temperature value TR with a first temperature threshold TS1 which is less than a preset value TI of a predetermined first value V1;
keeping the heat generating means 7 in the active condition at least until the first temperature threshold TS1 is reached.

In other words, during the initial cycle, a plurality of operations are performed for activating the heat generating means 7 and for increasing the temperature of the cooking chamber 4 close to the preset temperature value TI. It should be noted that the value TI preset by the user is stored in a memory register 18 of the control unit 15. More specifically, the preset value TI is preferably entered into the memory register 18 using the control interface 16. Alternatively, the preset value TI may be one of the predetermined values of a cooking programme stored in the memory register 18.

Advantageously, the comparison between the measured temperature value TR and the first temperature threshold TS1 (which is less than the preset temperature value TI) allows one to understand when the cooking chamber 4 is about to reach the preset temperature value TI.

It should be noted that the first predetermined value V1 is preferably between 1°C and 20°C. Even more preferably, the first predetermined value V1 is approximately 5°C. Alternatively, the first predetermined value V1 is between 0.2% and 1% of the preset temperature value TI.

In addition, the control unit 15 is configured for displaying on the control interface 16 a symbol representing the fact that the oven 1 is not ready until the first temperature threshold TS1 has been reached. Furthermore, the control unit 15 is configured for displaying on the control interface 16 a symbol representing the fact that the oven 1 is ready once the first temperature threshold TS1 has been reached.

Moreover, the control unit 15, after the initial cycle, is configured for performing other operations for preheating the cooking chamber 4. More specifically, the control unit 15 is configured for:
comparing the measured temperature value TR with a second temperature threshold TS2 which is greater than the preset temperature value TI of a second predetermined value V2;
keeping the heat generating means 7 in the active condition at least until the second temperature threshold TS2 is reached.

In other words, whilst the initial cycle is useful for understanding when the oven 1 is ready for the food to be introduced, the further operations for preheating are aimed at monitoring the heating of the cooking chamber 4 above the preset temperature value TI.

It should be noted that the second predetermined value V2 is preferably between 1°C and 20°C. Even more preferably, the second predetermined value V2 is approximately 10°C Alternatively, the second predetermined value V2 is between 0.2% and 1% of the preset temperature value TI.

Moreover, in the active state, the heat generating means 7 can be configured in a plurality of intermediate stages. More specifically, each intermediate stage is defined by a respective production of a predetermined quantity of heat. In other words, for each stage the burner 8 generates a predetermined quantity of heat different from that generated for the other stages. Preferably, the quantity of heat generated increases during passage from one stage to the next.

In the preferred embodiment, the heat generating means 7 are configurable between five stages in relation to the quantity of heat in an incremental fashion.

Moreover, the control unit 15 is configured for storing in a historic memory register 23 the measured temperature values TR and for switching the heat generating means 7 to one of the intermediate stages, immediately after reaching the first temperature threshold TS1, depending on the increasing or decreasing trend of the historic temperature values previously stored so as to switch the heat generating means 7 to a stage with heat which is more or less than the previous heat.

It should be noted that the temperature values TR measured and stored in the historic memory register 23 are catalogued by type of product to be cooked and/or quantity of products inserted in the cooking chamber 4 and/or by a predetermined cooking programme. In other words, the historic memory register 23 is configured for subdividing the measured temperature values TR by type of product to be cooked and/or quantity of products inserted in the cooking chamber 4 and/or by a predetermined cooking programme.

More specifically, the control unit 15 is configured for storing in the historic memory register 23 the measured temperature values TR, the drop time TC (where TC = tₘᵢₙ - t_{close}), the recovery time TP (where TP = tₘᵢₙ - t _{close}) and others parameters relating to a type of product to be cooked and/or to a quantity of products placed in the cooking chamber 4 and/or to a predetermined cooking programme. For example, all the related parameters are stored in the historic memory register 21 for each cooking programme, in such a way that when the same cooking programme is re-launched it is possible to compare each parameter (measured temperature value TR, drop time TC, recovery time TP) of the oven 1 measured instantaneously with the respective historic parameter stored in the historic memory register 21.

More in detail, the historic temperature values, the drop times TC and the recovery times TP measured identify a certain type of operation for a certain type of product and/or for a predetermined quantity of product and/or of a predetermined coking programme. For example, with reference only to the temperature values measured, the gradient of a hypothetical curve variable over time and passing through the historic temperature values identifies the degree of increase or decrease of the temperature in the cooking chamber 4. For this reason, by knowing the increasing or decreasing trend of the historic temperature values it is possible to switch the heat generating means 7 in advance to one of the intermediate stages before reaching the preset temperature value in such a way as to control the heat generating means 7 in an optimum manner to eliminate the thermal inertias linked with the pellets.

In detail, the control unit 15 is configured for:
picking out the temperature values stored in the historic memory register 23;
calculating the increasing or decreasing trend;
comparing the trend with at least one predetermined increasing or decreasing value;
varying the intermediate stage of the heat generating means depending on the comparison carried out.

More specifically, the control unit 15 is configured for picking up the temperature values TR stored in the historic memory register 23 relative substantially to the same (or similar) type of food to be cooked and/or substantially to the same quantity of food. For this reason, the control unit 15 is configured for using the information resulting from the comparison between the temperature value TI preset by the user and the first threshold value TS1, for determining the type of food which has been introduced in the cooking chamber 4 and selecting the temperature values TR stored in the historic memory register 23 relative substantially to the same type.

More specifically, it should be noted that the predetermined increasing or decreasing value represents a limit value between a state for rapidly increasing/decreasing the temperature and a state for slowly increasing/decreasing the temperature. In that way, the control unit 15 is configured for varying the intermediate step of the heat generating means 7 as a function of this comparison.

For example, if the increasing state of the temperature is fast it means that the temperature inside the cooking chamber 4 is quickly increasing towards the temperature value TI preset by the user. Consequently, in that case it may be convenient to switch the heat generating means 7 to a stage for generating heat which is less than the preceding one in such a way as to start to slow down the temperature increase towards the temperature value TI preset by the user.

Consequently, in that case it may be convenient to switch the heat generating means 7 to a stage for generating heat which is less than the preceding one in such a way as to start to slow down the temperature increase towards the temperature value TI preset by the user. In this way, when the measured temperature TR starts to reach the preset temperature TI, the burner 8 decreases the heat production.

Similarly to what is described above for the temperature, the control unit 15 is configured for:
picking out the values relating to the drop times TC and the recovery times TR stored in the historic memory register 23;
calculating the increasing or decreasing trend;
comparing the trend with at least one predetermined increasing or decreasing value;
varying the intermediate stage of the heat generating means depending on the comparison carried out.

Advantageously, this configuration of the heat generating means 7 allows the thermal inertia linked to the switching off of the burner 8 fuelled by pellets 11 to be overcome since the latter starts to switch itself off before the preset temperature TI is reached.

Moreover, the oven 1 also comprises cooling means 21 operatively associated with the heating chamber for generating a flow of cooling air.

According to the invention, the cooling means 21 comprise a valve 22 interposed between the heating chamber 5 and the outside environment and which can be configured between an open condition and a closed condition.

More specifically, during the open condition of the valve 22, the heating chamber 5 is in fluid communication with the outside to pick up air from the surrounding environment having a temperature less than that in the oven 1.

The control unit 15 is configured for activating the cooling means 21 if the measured temperature value TR is greater than the second temperature threshold TS2. The activation of the cooling means 21 comprises the passage of the valve 22 from the closed condition to the open condition.

In other words, if the measured temperature value TR exceeds the second temperature threshold TS2 the cooling means 21 are switched on in such a way that the high temperature does not damage the structures inside the oven 1 and it is not dangerous for the users who access the cooking chamber 4. In any case, it should be noted that the control unit 15 is configured for keeping the heat generating means 7 active when the cooling means 21 are activated in such a way as to keep the burner 8 active. Advantageously, it is possible in this way to keep active the production of heat before placing food in the oven in such a way as to reduce the temperature inertias linked with the opening of the door 20 for introducing food in the cooking chamber 4. For this reason, after placing food in the oven, the heating chamber 5 is charged with heat which is transferred to the cooking chamber 4 by activating the means 12 for circulating hot air. In effect, the control unit 15 is configured for activating the means 12 for circulating hot air after placing food in the oven and, more in detail, after closing the door 20.

In addition, the control unit 15 is also configured for activating the cooling means 21 to speed up the lowering of the temperature inside the cooking chamber 4 following a lowering of the temperature value TI preset by the user (for example, linked to cooking at a lower temperature). In other words, if the user lowers the preset temperature value TI it is necessary to wait until the cooking chamber 4 cools down in such a way as to prevent cooking the food at a temperature higher than the one just set. For this reason, it is possible to activate the cooling means 21 to speed up the lowering of the temperature inside the cooking chamber 4 in such a way as to reduce the waiting time.

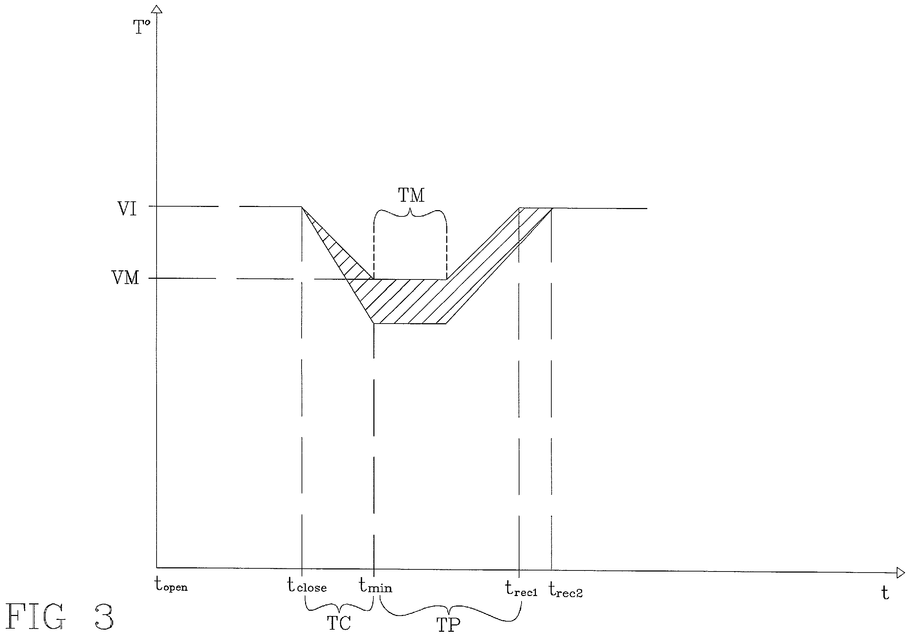

Figure 3 shows a graph representing the difference in heat loss in the cooking chamber 4 when the door 20 is opened. More specifically, the instant "tₒₚₑₙ" shown in Figure 3 represents the instant of opening the door 20, while the instant "t_{close}" represents the instant of closing the door 20. More in detail, the graph shows that after closing the door 20 there is a drop in the temperature of the cooking chamber 4 up to a time "tₘᵢₙ" in which the temperature of the cooking chamber reaches a minimum temperature value. Following the reaching of the minimum temperature value, the temperature remains substantially unchanged for a time TM after which the temperature inside the cooking chamber 4 increases up to time "t_{rec1}" when the temperature value is returned to the initial value before opening the door (and usually equal to or greater than the temperature value TI preset by the user).

In other words, after the closing the door 20 for placing the food in the oven, there is a drop time TC (where TC = tₘᵢₙ - t_{close}) during which the temperature drops from the value VI (initial value preferably coinciding with the preset temperature value TI) to the value VM, a maintained time TM of the temperature value VM and a recovery time TP.

More in detail, the grained area represents the difference in heat loss between the prior art and this invention. In effect, by way of example, in the prior art the temperature dropped from 240°C to 205°C, whilst, according to this invention, the temperature drops from 240°C to 220°C thus recovering a large quantity of heat compared with the prior art. Moreover, in the prior art the recovery time "t_{rec2}" to pass from the temperature of 205°C to the temperature of 240°C is greater than the time "t_{rec1}" previously identified. Moreover, the control unit 15 is designed to again perform the operations of the initial cycle if the measured temperature value TR is less than the second temperature threshold TS2. In other words, if the measured temperature value TR is greater than the second temperature threshold TS2 the cooling means 21 are activated, whilst if the measured temperature value TR is less than the second temperature threshold TS2 the cooling means 21 are not activated and the initial cycle operations are performed again.

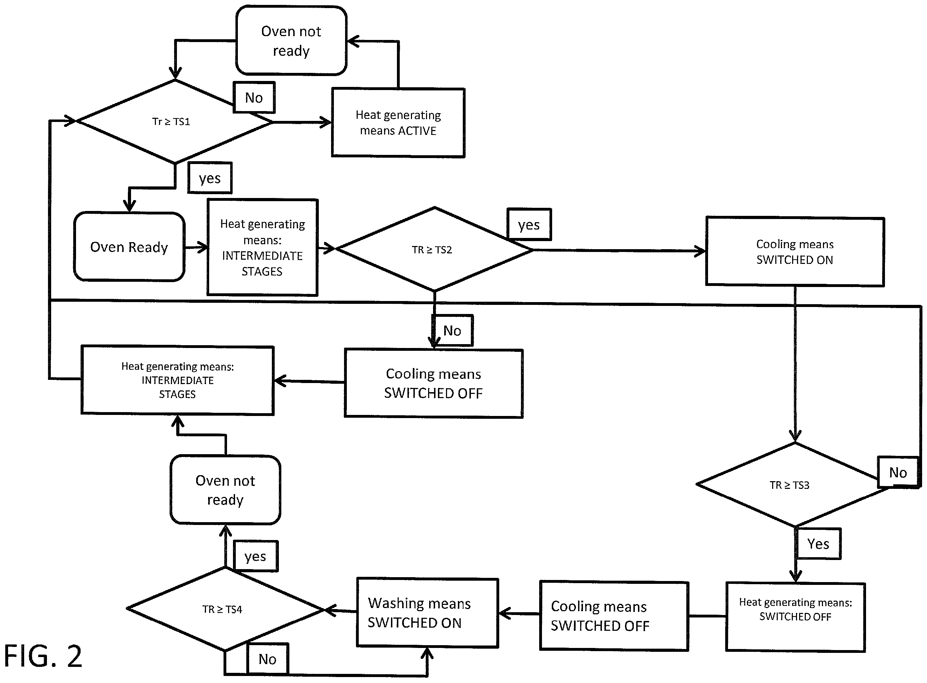

More in detail, as shown in Figure 2, as the heat generating means 7 are configurable between a plurality of intermediate stages, the control unit 15 is configured for switching the heat generating means 7 to one of the intermediate stages, if the measured temperature value TR is less than the second temperature threshold TS2, depending on the increasing or decreasing trend of the historic temperature values previously stored so as to switch the heat generating means 7 to a stage with heat which is more or less than the previous heat.

For example, the faster the measured temperature value TR moves towards the second threshold temperature the more the heat generating means 7 are driven towards a step for generating heat less than the previous one. Moreover, the control unit 15 is configured for comparing the measured temperature value TR with a third temperature threshold TS3 which is greater than the second temperature threshold TS2 by a third predetermined value V3. More specifically, the control unit 15 is configured for switching the heat generating means 7 to the switched off state if the measured temperature value TR is greater than the third temperature threshold TS3. In other words, if the cooling means 21 are unable to sufficiently lower the temperature inside the cooking chamber 4, the heat generating means 7 are switched off in such a way as to a favour a further lowering of the temperature. In yet other words, if the temperature inside the cooking chamber 4 increases excessively, the heat generating means 7 are switched off in such a way as to avoid damage to the structures of the oven 1.

Moreover, following the switching off of the heat generating means 7, the control unit 15 is configured for deactivating the cooling means 21 after a predetermined period of time from the comparison with the third temperature threshold TS3. It should be noted that the third predetermined value V3 is preferably between 1°C and 20°C. Even more preferably, the third predetermined value V3 is approximately 15°C. Alternatively, the third predetermined value V3 is between 0.2% and 1% of the preset temperature value TI.

In addition, the control unit 15 is designed to again perform the operations of the initial cycle if the measured temperature value TR is less than the third temperature threshold TS3.

In other words, if the measured temperature value TR is greater than the third temperature threshold TS3 the heat generating means 7 are switched off, whilst if the measured temperature value TR is less than the third temperature threshold TS3 the initial cycle operations are performed.

Moreover, the oven 1 comprises means for automatic cleaning of the heating chamber 5 operatively connected to the control unit 15. More specifically, the control unit 15 is configured for performing a cleaning cycle by switching the cleaning means from an active condition to a switched off condition for a predetermined period of time. In other words, the cleaning means are only kept active for a predetermined time interval so as to perform a cleaning cycle. It should be noted that the cleaning means comprise a duct for feeding washing fluid. In any event, the means for cleaning the oven 1 are of known type and are not described further, since they fall outside the scope of this invention.

Moreover, the control unit 15 is configured for performing a cleaning cycle after switching the heat generating means 7 from the active state to the switched off state when the measured temperature value TR is greater than the third threshold value V3. Thus, advantageously, it is possible to use the idle time when the heat generating means 7 are switched off to perform the cleaning cycle.

In addition, if the measured temperature value TR is greater than the third threshold value V3, the control unit 15 is designed to compare again the measured temperature value TR with a fourth threshold value TS4 substantially equal to the third threshold value V3. In that case, the control unit 15 is configured for:
performing another cleaning cycle if the measured temperature value TR is greater than the third threshold value TS4;
configuring the heat generating means 7 in the active condition if the measured temperature value TR is less than the third fourth value TS4.

It should be noted that the fourth threshold value TS4 is less than the third threshold value V3 by a predetermined heat regulation deviation value VS. Preferably, the heat regulation deviation value is between 2°C and 6°C. In other words, TS4 = TS3 - VS.

Moreover, the control unit 15 is configured for displaying on the control interface 16 a symbol representing the fact that the oven 1 is not ready if the first measured temperature value TR is greater than the fourth threshold value TS4. At the same time, the control unit 15 is configured for switching the heat generating means 7 to one of the intermediate stages and, subsequently, performing the initial cycle.

More specifically, the control unit 15 is configured for switching the heat generating means 7 to one of the intermediate stages if the measured temperature value TR is greater than the fourth temperature threshold TS4, depending on the increasing or decreasing trend of the historic temperature values previously stored so as to switch the heat generating means 7 to a stage with heat which is more or less than the previous heat.

For example, the faster the measured temperature value TR moves towards the fourth threshold temperature the more the heat generating means 7 are driven towards a step for generating heat less than the previous one. This invention also relates to a method for controlling a pellet burning oven 1 of the type described above. More specifically, it should be noted that the method is derived directly from what is described above, which is here below incorporated in its entirety.

More specifically, the method comprises, before the food is placed in the cooking chamber 4, configuring the heat generating means 7 in the active condition in such a way as to switch on the burner 8. The method then comprises measuring the temperature in the cooking chamber 4 and comparing the measured temperature value TR with the first temperature threshold TS1 in such a way as to check when the temperature of the cooking chamber 4 is close to the temperature preset by the user.

The method also comprises a step for keeping the heat generating means 7 in the active condition at least until the first temperature threshold TS1 is reached.

After reaching the first temperature threshold TS1, the method comprises comparing the measured temperature value TR with the second temperature threshold TS2 in such a way as to monitor the excess temperature compared with the temperature preset by the user. Moreover, the method comprises keeping the heat generating means 7 in the active condition at least until the second temperature threshold TS2 is reached.

When the second temperature threshold TS2 is exceeded, the method comprises activating the cooling means 21 for cooling the temperature inside the cooking chamber 4. Moreover, when the third temperature threshold TS3 (which is less than the second temperature threshold TS2) is exceeded, the method comprises switching off the heat generating means 7 in such a way as to favour the cooling of the cooking chamber 4. In addition, the method also comprises activating the cooling means 21 to speed up the lowering of the temperature inside the cooking chamber 4 following a lowering of the temperature value TI preset by the user (for example, linked to cooking at a lower temperature). In other words, it is possible to activate the cooling means 21 to speed up the lowering of the temperature inside the cooking chamber 4 in such a way as to reduce the cooling time from the previous preset temperature TI to the most recently modified one.

This invention achieves the preset aims.

More specifically, this invention enables the control of the cooking chamber temperature to be optimised before opening the oven door. In effect, the comparison of the temperature with the various predetermined temperature thresholds makes it possible to monitor the temperature increase inside the heating chamber in such a way as to not have an excessive temperature and, at the same time, to keep the oven ready for heating the food after it is placed in the oven.

In other words, this invention allows the thermal inertias linked to the pellets to be opposed when there are temperature drops linked to the opening of the oven door. More specifically, the action of opposing the thermal inertias also results from the presence of a modulation of the heat generating means between different intermediate stages. In that way, it is possible to increase or decrease the heat production as a function of the temperature difference between the temperature measured and the predetermined temperature thresholds in such a way as to anticipate the effect on the temperature variation.

It should also be noted that this invention is relatively easy to implement and that the cost of implementing the invention is relatively low.

## Claims

1. A pellet (11) burning oven (1) for cooking food, comprising:
a frame (2) internally defining a space; said frame (2) comprising a dividing wall (3) designed to divide said space into a food cooking chamber (4) and a heating chamber (5);
pellet (11) burning heat generating means (7) positioned in the heating chamber (5) for generating heat; said heat generating means (7) being configurable at least between a switched off state and an active state;
means (12) for causing hot air circulation at least partly positioned in the heating chamber (5) for producing a hot air flow from the heating chamber (5) towards the cooking chamber (4) for heating the food;
a control unit (15) for the heat generating means (7) operatively connected to the heat generating means (7) for switching them between one state and the other;
means (17) for measuring the temperature of the cooking chamber (4) operatively connected to the control unit (15) for transmitting to the latter the information about the instantaneous temperature measured; **characterised in that** the control unit (15) is designed to perform a sequence of operations for preheating the cooking chamber (4) in the absence of food comprising an initial cycle; the control unit (15) is configured for performing said initial cycle, that is, for:
configuring the heat generating means (7) in the active condition;
comparing the temperature value measured (TR) with a first temperature threshold (TS1) which is a predetermined first value (V1) less than a temperature value preset (TI) by a user;
keeping the heat generating means (7) in the active condition at least until the first temperature threshold (TS1) is reached; said control unit (15), after the initial cycle, being designed to carry out the following further operations for preheating the cooking chamber (4):
comparing the temperature value measured (TR) with a second temperature threshold (TS2) which is a predetermined second value (V2) greater than the temperature value preset (TI);
keeping the heat generating means (7) in the active condition at least until the second temperature threshold (TS2) is reached;
said oven (1) comprising cooling means (21) operatively connected to the control unit (15) and operatively associated with the heating chamber (5) for generating a cooling air flow; said control unit (15) being configured to activate the cooling means (21) if the temperature value measured (TR) is greater than the second temperature threshold (TS2);
the cooling means (21) comprising a valve (22) interposed between the heating chamber (5) and the outside environment and which can be configured between an open condition and a closed condition; during the open condition of the valve (22), the heating chamber (5) being in fluid communication with the outside to pick up air from the surrounding environment having a temperature less than that in the oven (1); said activation of the cooling means (21) allows the passage of the valve (22) from the closed condition to the open condition.

2. The oven (1) according to claim 1, **characterised in that**, in the active state, the heat generating means (7) can be configured in a plurality of intermediate stages; each intermediate stage being defined by a respective production of a predetermined amount of heat; said control unit (15) being designed to save in a historic memory register (23) the temperature values measured (TR) and to switch the heat generating means (7) to one of the intermediate stages depending on the increasing or decreasing trend of the historic temperature values previously saved so as to switch the heat generating means (7) to a stage with heat which is more or less greater than the previous heat.

3. The oven (1) according to any of the preceeding claims, **characterised in that** the control unit (15) is designed to again perform the operations of the initial cycle if the temperature value measured (TR) is less than the second temperature threshold (TS2).

4. The oven (1) according to claim 3, **characterised in that**, in the active state, the heat generating means (7) can be configured in a plurality of intermediate stages; each intermediate stage being defined by a respective production of a predetermined amount of heat; said control unit (15) being designed to switch the heat generating means (7) to one of the intermediate stages depending on the difference between the temperature value measured (TR) and the second temperature threshold (TS2).

5. The oven (1) according to any one of the preceding claims, **characterised in that** the control unit (15) is designed to compare the temperature value measured (TR) with a third temperature threshold (TS3) which is greater than the second the second temperature threshold (TS2); said control unit (15) being designed to switch the heat generating means (7) to the switched off state if the temperature value measured (TR) is greater than the third temperature threshold (TS3).

6. The oven (1) according to claim 5, **characterised in that** the control unit (15) is designed to again perform the operations of the initial cycle if the temperature value measured (TR) is less than the third temperature threshold (TS3).

7. The oven (1) according to claim 5 or 6, **characterised in that** it comprises means for automatic cleaning of the heating chamber (5) operatively connected to the control unit (15); said control unit (15) being designed to perform a cleaning cycle by switching the cleaning means from an active condition to a switched off condition for a predetermined period of time.

8. The oven (1) according to claim 7, **characterised in that** the control unit (15) is designed to perform a cleaning cycle after switching the heat generating means (7) from the active state to the switched off state when the temperature value measured is greater than the third temperature threshold (TS3); said control unit (15) being further designed for again comparing the temperature value measured with a fourth temperature threshold (TS4) substantially equal to the third temperature threshold (TS3); said control unit (15) being designed for:
performing another cleaning cycle if the temperature value measured (TR) is greater than the fourth temperature threshold (TS4);
performing the operations of the initial cycle if the temperature value measured is less than the fourth temperature threshold (TS4).

9. The oven (1) according to claim 8, **characterised in that** the fourth temperature threshold (TS4) is less than the third temperature threshold (TS3) by a predetermined heat regulation deviation value (VS).

10. The oven (1) according to claim 8 or 9, **characterised in that**, in the active state, the heat generating means (7) can be configured in a plurality of intermediate stages; each intermediate stage being defined by a respective production of a predetermined amount of heat; said control unit (15) being designed to save in a historic memory register (23) the temperature values measured (TR) and, if the temperature value measured (TR) is less than the fourth temperature threshold (TS4), to switch the heat generating means (7) to one of the intermediate stages depending on the increasing or decreasing trend of the historic temperature values previously saved so as to switch the heat generating means (7) to a stage with heat which is more or less greater than the previous heat before performing the initial cycle.

11. A method for controlling a pellet (11) burning oven (1) comprising a food cooking chamber (4) and a heating chamber (5) in which pellet (11) burning heat generating means (7) are inserted which can be configured at least between an active condition and a switched off condition; said method being **characterised in that** it comprises, before putting the food in the cooking chamber (4), the following operating steps:
configuring the heat generating means (7) in the active condition;
measuring the temperature in the cooking chamber (4);
comparing the temperature value measured (TR) with a first temperature threshold (TS1) which is a predetermined first value (V1) less than a temperature value preset (TI) by a user;
keeping the heat generating means (7) in the active condition at least until the first temperature threshold (TS1) is reached;
comparing the temperature value measured (TR) with a second temperature threshold (TS2) which is a predetermined second value (V2) greater than the temperature value preset (TI);
keeping the heat generating means (7) in the active condition at least until the second temperature threshold (TS2) is reached.
generating a flow of cooling air in the heating chamber (5) through cooling means (21) operatively connected to the control unit (15) and operatively associated with the heating chamber (5) if the temperature value measured (TR) is greater than the second temperature threshold (TS2);
the step of generating a flow of cooling air being actuated through a valve (22) interposed between the heating chamber (5) and the outside environment and which can be configured between an open condition and a closed condition, in such a way that during the open condition of the valve (22), the heating chamber (5) is in fluid communication with the outside to pick up air from the surrounding environment having a temperature less than that in the oven (1); said activation of the cooling means (21) allows the passage of the valve (22) from the closed condition to the open condition.

## Patentansprüche

1. Mit Pellets (11) betriebener Backofen (1), umfassend:
einen Rahmen (2), der innenseitig einen Raum definiert, wobei der Rahmen (2) eine Trennwand (3) umfasst, die ausgestaltet ist, um den Raum in eine Garkammer für Nahrungsmittel (4) und eine Heizkammer (5) zu trennen;
mit Pellets (11) betriebene Hitze erzeugende Mittel (7), die in der Heizkammer (5) positioniert sind, um Hitze zu erzeugen, wobei die Hitze erzeugenden Mittel (7) mindestens zwischen einem ausgeschalteten Zustand und einem aktiven Zustand konfigurierbar sind;
Mittel (12), um die Heißluftzirkulation zu verursachen, die mindestens teilweise in der Heizkammer (5) positioniert sind, um einen Heißluftstrom aus der Heizkammer (5) hinführend zur Garkammer (4) zum Erhitzen der Nahrungsmittel zu erzeugen;
ein Steuergerät (15) für die Hitze erzeugenden Mittel (7), das betriebswirksam mit den Hitze erzeugenden Mitteln (7) verbunden ist, um diese zwischen einem und dem anderen Zustand umzuschalten;
Mittel (17) zum Messen der Temperatur der Garkammer (4), die betriebswirksam mit dem Steuergerät (15) verbunden sind, um diesem die Informationen über die gemessene Momentantemperatur zu übermitteln, **dadurch gekennzeichnet, dass** das Steuergerät (15) ausgestaltet ist, um eine Abfolge an Vorgängen zum Vorheizen der Heizkammer (4) ohne Nahrungsmittel durchzuführen, umfassend einen Anfangszyklus, wobei das Steuergerät (15) ausgelegt ist, um diesen Anfangszyklus durchzuführen, d. h., um
die Hitze erzeugenden Mittel (7) im aktiven Zustand zu konfigurieren;
den gemessenen Temperaturwert (TR) mit einem ersten Temperaturschwellenwert (TS1) zu vergleichen, bei dem es sich um einen vorgegebenen ersten Wert (V1) handelt, der geringer ist als ein von einem Nutzer vorgegebener Temperaturwert (TI);
die Hitze erzeugenden Mittel (7) im aktiven Zustand aufrechtzuerhalten, zumindest bis der erste Temperaturschwellenwert (TS1) erreicht ist, wobei das Steuergerät (15) nach dem Anfangszyklus ausgestaltet ist, um die folgenden weiteren Vorgänge zum Vorheizen der Garkammer (4) durchzuführen:
Vergleichen des gemessenen Temperaturwerts (TR) mit einem zweiten Temperaturschwellenwert (TS2), bei dem es sich um einen vorgegebenen zweiten Wert (V2) handelt, der größer ist als der vorgegebene Temperaturwert (TI); Aufrechterhalten der Hitze erzeugenden Mittel (7) im aktiven Zustand, zumindest bis der zweite Temperaturschwellenwert (TS2) erreicht ist,
wobei der Backofen (1) Kühlungsmittel (21) umfasst, die betriebswirksam mit dem Steuergerät (15) verbunden und betriebswirksam mit der Heizkammer (5) assoziiert sind, um einen Kühlungsluftstrom zu erzeugen, wobei das Steuergerät (15) ausgelegt ist, um die Kühlungsmittel (21) zu aktivieren, wenn der gemessene Temperaturwert (TR) größer ist als der zweite Temperaturschwellenwert (TS2),
wobei die Kühlungsmittel (21) ein Ventil (22) umfassen, das zwischen der Heizkammer (5) und der äußeren Umgebung eingesetzt ist und das zwischen einem geöffneten Zustand und einem geschlossenen Zustand konfiguriert werden kann, wobei die Heizkammer (5) während des geöffneten Zustands des Ventils (22) in Fluidkommunikation mit der Außenseite ist, um Luft aus der Umgebung anzusaugen, aufweisend eine geringere Temperatur als die im Backofen (1), wobei die Aktivierung der Kühlungsmittel (21) den Wechsel des Ventils (22) vom geschlossenen in den geöffneten Zustand erlaubt.

2. Backofen (1) nach Anspruch 1, **dadurch gekennzeichnet, dass** die Hitze erzeugenden Mittel (7) im aktiven Zustand in einer Vielzahl an Zwischenstadien konfiguriert werden können, wobei ein jedes Zwischenstadium durch eine jeweilige Produktion einer vorgegebenen Menge an Hitze definiert ist, wobei das Steuergerät (15) ausgestaltet ist, um in einem Historienspeicherregister (23) die gemessenen Temperaturwerte (TR) zu speichern und die Hitze erzeugenden Mittel (7) in eins der Zwischenstadien umzuschalten, abhängig vom ansteigenden oder abnehmenden Trend der zuvor gespeicherten Historientemperaturwerte, sodass die Hitze erzeugenden Mittel (7) in ein Stadium mit einer Hitze umgeschaltet werden, die mehr oder weniger größer ist als die vorherige Hitze.

3. Backofen (1) nach einem der vorhergehenden Ansprüche, **dadurch gekennzeichnet, dass** das Steuergerät (15) ausgestaltet ist, um die Vorgänge des Anfangszyklus erneut auszuführen, wenn der gemessene Temperaturwert (TR) geringer ist als der zweite Temperaturschwellenwert (TS2).

4. Backofen (1) nach Anspruch 3, **dadurch gekennzeichnet, dass** die Hitze erzeugenden Mittel (7) im aktiven Zustand in einer Vielzahl an Zwischenstadien konfiguriert werden können, wobei ein jedes Zwischenstadium durch eine jeweilige Produktion einer vorgegebenen Menge an Hitze definiert ist, wobei das Steuergerät (15) ausgestaltet ist, um die Hitze erzeugenden Mittel (7) in eins der Zwischenstadien umzuschalten, abhängig vom Unterschied zwischen dem gemessenen Temperaturwert (TR) und dem zweiten Temperaturschwellenwert (TS2).

5. Backofen (1) nach einem der vorhergehenden Ansprüche, **dadurch gekennzeichnet, dass** das Steuergerät (15) ausgestaltet ist, um den gemessenen Temperaturwert (TR) mit einem dritten Temperaturschwellenwert (TS3) zu vergleichen, der größer ist als der zweite Temperaturschwellenwert (TS2), wobei das Steuergerät (15) ausgestaltet ist, um die Hitze erzeugenden Mittel (7) in den ausgeschalteten Zustand umzuschalten, wenn der gemessene Temperaturwert (TR) größer ist als der dritte Temperaturschwellenwert (TS3).

6. Backofen (1) nach Anspruch 5, **dadurch gekennzeichnet, dass** das Steuergerät (15) ausgestaltet ist, um die Vorgänge des Anfangszyklus erneut auszuführen, wenn der gemessene Temperaturwert (TR) geringer ist als der dritte Temperaturschwellenwert (TS3).

7. Backofen (1) nach Anspruch 5 oder 6, **dadurch gekennzeichnet, dass** er Mittel zum automatischen Reinigen der Heizkammer (5) umfasst, die betriebswirksam mit dem Steuergerät (15) verbunden sind, wobei das Steuergerät (15) ausgestaltet ist, um einen Reinigungszyklus durchzuführen, indem die Reinigungsmittel für einen vorgegebenen Zeitraum von einem aktiven Zustand in einen ausgeschalteten Zustand umgeschaltet werden.

8. Backofen (1) nach Anspruch 7, **dadurch gekennzeichnet, dass** das Steuergerät (15) ausgestaltet ist, um einen Reinigungszyklus durchzuführen, nachdem die Hitze erzeugenden Mittel (7) vom aktiven Zustand in den ausgeschalteten Zustand umgeschaltet wurden, wenn der gemessene Temperaturwert größer ist als der dritte Temperaturschwellenwert (TS3), wobei das Steuergerät (15) zudem ausgestaltet ist, um den gemessenen Temperaturwert erneut mit einem vierten Temperaturschwellenwert (TS4) zu vergleichen, der im Wesentlichen gleich dem dritten Temperaturschwellenwert (TS3) ist, wobei das Steuergerät (15) ausgestaltet ist, um einen weiteren Reinigungszyklus durchzuführen, wenn der gemessene Temperaturwert (TR) größer ist als der vierte Temperaturschwellenwert (TS4);
die Vorgänge des Anfangszyklus durchzuführen, wenn der gemessene Temperaturwert geringer ist als der vierte Temperaturschwellenwert (TS4).

9. Backofen (1) nach Anspruch 8, **dadurch gekennzeichnet, dass** der vierte Temperaturschwellenwert (TS4) um einen vorgegebenen Hitzeregulierungsabweichungswert (VS) geringer ist als der dritte Temperaturschwellenwert (TS3).

10. Backofen (1) nach Anspruch 8 oder 9, **dadurch gekennzeichnet, dass** die Hitze erzeugenden Mittel (7) im aktiven Zustand in einer Vielzahl an Zwischenstadien konfiguriert werden können, wobei ein jedes Zwischenstadium durch eine jeweilige Produktion einer vorgegebenen Menge an Hitze definiert ist, wobei das Steuergerät (15) ausgestaltet ist, um in einem Historienspeicherregister (23) die gemessenen Temperaturwerte (TR) zu speichern und die Hitze erzeugenden Mittel (7) in eins der Zwischenstadien umzuschalten, abhängig vom ansteigenden oder abnehmenden Trend der zuvor gespeicherten Historientemperaturwerte, wenn der gemessene Temperaturwert (TR) geringer ist als der vierte Temperaturschwellenwert (TS4), sodass die Hitze erzeugenden Mittel (7) in ein Stadium mit einer Hitze umgeschaltet werden, die mehr oder weniger größer ist als die vorherige Hitze vor der Durchführung des Anfangszyklus.

11. Verfahren zur Steuerung eines mit Pellets (11) betriebenen Backofens (1), umfassend eine Kammer zum Garen von Nahrungsmitteln (4) und eine Heizkammer (5), in der mit Pellets (11) betriebene Hitze erzeugende Mittel (7) eingefügt werden, die mindestens zwischen einem aktiven Zustand und einem ausgeschalteten Zustand konfiguriert werden können, wobei das Verfahren **dadurch gekennzeichnet ist, dass** es, bevor die Nahrungsmittel in die Garkammer (4) gegeben werden, die folgenden Betriebsschritte umfasst:
Konfigurieren der Hitze erzeugenden Mittel (7) im aktiven Zustand, Messen der Temperatur in der Garkammer (4) ;
Vergleichen des gemessenen Temperaturwerts (TR) mit einem ersten Temperaturschwellenwert (TS1), bei dem es sich um einen vorgegebenen ersten Wert (V1) handelt, der geringer ist als ein von einem Nutzer vorgegebener Temperaturwert (TI);
Aufrechterhalten der Hitze erzeugenden Mittel (7) im aktiven Zustand, zumindest bis der erste Temperaturschwellenwert (TS1) erreicht ist;
Vergleichen des gemessenen Temperaturwerts (TR) mit einem zweiten Temperaturschwellenwert (TS2), bei dem es sich um einen vorgegebenen zweiten Wert (V2) handelt, der größer ist als der vorgegebene Temperaturwert (TI);
Aufrechterhalten der Hitze erzeugenden Mittel (7) im aktiven Zustand, zumindest bis der zweite Temperaturschwellenwert (TS2) erreicht ist;
Erzeugen eines Kühlungsluftstroms in der Heizkammer (5) durch die Kühlungsmittel (21), die betriebswirksam mit dem Steuergerät (15) verbunden und betriebswirksam mit der Heizkammer (5) assoziiert sind, wenn der gemessene Temperaturwert (TR) größer ist als der zweite Temperaturschwellenwert (TS2),
wobei der Schritt zum Erzeugen eines Kühlungsluftstroms durch ein Ventil (22) durchgeführt wird, das zwischen der Heizkammer (5) und der äußeren Umgebung eingesetzt ist und das zwischen einem geöffneten Zustand und einem geschlossenen Zustand konfiguriert werden kann, sodass die Heizkammer (5) während des geöffneten Zustands des Ventils (22) in Fluidkommunikation mit der Außenseite ist, um Luft aus der Umgebung anzusaugen, aufweisend eine geringere Temperatur als die im Backofen (1), wobei die Aktivierung der Kühlungsmittel (21) den Wechsel des Ventils (22) vom geschlossenen in den geöffneten Zustand erlaubt.

## Revendications

1. Four de cuisson (1) alimenté en granulés (11) destiné à cuir des aliments, comprenant :
un châssis (2) définissant en son sein un espace ; ledit châssis (2) comprenant une cloison de séparation (3) conçue pour diviser ledit espace en une chambre de cuisson (4) d'aliments et une chambre de chauffage (5) ;
des moyens de génération (7) de chaleur à granulés (11) positionnés dans la chambre de chauffage (5) pour générer de la chaleur ; lesdits moyens de génération (7) de chaleur pouvant être configurés au moins entre un état désactivé et un état actif ;
des moyens (12), servant à provoquer la circulation d'air chaud, au moins positionnés en partie dans la chambre de chauffage (5) pour produire un flux d'air chaud de la chambre de chauffage (5) vers la chambre de cuisson (4) pour chauffer la nourriture ;
une unité de commande (15) des moyens de génération (7) de chaleur fonctionnellement reliée aux moyens de génération (7) de chaleur pour les commuter d'un état à l'autre ;
des moyens (17), servant à mesurer la température de la chambre de cuisson (4), fonctionnellement reliés à l'unité de commande (15) pour transmettre à cette dernière les informations sur la température instantanée mesurée ; **caractérisé en ce que** l'unité de commande (15) est conçue pour exécuter une séquence d'opérations pour préchauffer la chambre de cuisson (4) en l'absence de nourriture comprenant un cycle initial ; l'unité de commande (15) est configurée pour effectuer ledit cycle initial, c'est-à-dire, pour :
configurer les moyens de génération (7) de chaleur dans la condition active ;
comparer la valeur de température mesurée (TR) à un premier seuil de température (TS1) étant une première valeur prédéterminée (V1) inférieure à une valeur de température préétablie (TI) par un utilisateur ;
maintenir les moyens de génération (7) de chaleur dans la condition active au moins jusqu'à ce que le premier seuil de température (TS1) soit atteint ; ladite unité de commande (15), après le cycle initial, étant conçue pour réaliser les opérations supplémentaires suivantes pour préchauffer la chambre de cuisson (4) :
comparer la valeur de température mesurée (TR) à un second seuil de température (TS2) étant une seconde valeur prédéterminée (V2) supérieure à la valeur de température préétablie (TI) ;
maintenir les moyens de génération (7) de chaleur dans la condition active au moins jusqu'à ce que le second seuil de température (TS2) soit atteint ;
ledit four (1) comprenant des moyens de refroidissement (21) fonctionnellement reliés à l'unité de commande (15) et fonctionnellement associés à la chambre de chauffage (5) pour générer un flux d'air de refroidissement ; ladite unité de commande (15) étant configurée pour activer les moyens de refroidissement (21) si la valeur de température mesurée (TR) est supérieure au second seuil de température (TS2) ;
les moyens de refroidissement (21) comprenant une vanne (22) interposée entre la chambre de chauffage (5) et l'environnement extérieur et pouvant être configurée entre une condition d'ouverture et une condition de fermeture ; pendant la condition d'ouverture de la vanne (22), la chambre de chauffage (5) étant en communication fluidique avec l'extérieur pour capter de l'air, provenant du milieu environnant, ayant une température inférieure à celle du four (1) ; ladite activation des moyens de refroidissement (21) permet à la vanne (22) de passer de la condition de fermeture à la condition d'ouverture.

2. Four (1) selon la revendication 1, **caractérisé en ce que**, dans l'état actif, les moyens de génération (7) de chaleur peuvent être configurés dans une pluralité de stades intermédiaires ; chaque stade intermédiaire étant défini par une production respective d'une quantité prédéterminée de chaleur ; ladite unité de commande (15) étant conçue pour enregistrer dans un registre de mémoire historique (23) les valeurs de température mesurées (TR) et pour commuter les moyens de génération (7) de chaleur à l'un des stades intermédiaires selon la tendance d'augmentation ou de diminution des valeurs de température historiques précédemment enregistrées de sorte à commuter les moyens de génération (7) de chaleur à un stade avec la chaleur plus ou moins supérieure à la chaleur précédente.

3. Four (1) selon l'une quelconque des revendications précédentes, **caractérisé en ce que** l'unité de commande (15) est conçue pour à nouveau exécuter les opérations du cycle initial si la valeur de température mesurée (TR) est inférieure au second seuil de température (TS2).

4. Four (1) selon la revendication 3, **caractérisé en ce que**, dans l'état actif, les moyens de génération (7) de chaleur peuvent être configurés dans une pluralité de stades intermédiaires ; chaque stade intermédiaire étant défini par une production respective d'une quantité prédéterminée de chaleur ; ladite unité de commande (15) étant conçue pour commuter les moyens de génération (7) de chaleur vers l'un des stades intermédiaires selon la différence entre la valeur de température mesurée (TR) et le second seuil de température (TS2).

5. Four (1) selon l'une quelconque des revendications précédentes, **caractérisé en ce que** l'unité de commande (15) est conçue pour comparer la valeur de température mesurée (TR) à un troisième seuil de température (TS3) étant supérieur au second seuil de température (TS2) ; ladite unité de commande (15) étant conçue pour commuter les moyens de génération (7) de chaleur vers l'état de désactivation si la valeur de température mesurée (TR) est supérieure au troisième seuil de température (TS3).

6. Four (1) selon la revendication 5, **caractérisé en ce que** l'unité de commande (15) est conçue pour à nouveau exécuter les opérations du cycle initial si la valeur de température mesurée (TR) est inférieure au troisième seuil de température (TS3).

7. Four (1) selon la revendication 5 ou 6, **caractérisé en ce qu'**il comprend des moyens, servant à nettoyer automatiquement la chambre de chauffage (5), fonctionnellement reliés à l'unité de commande (15) ; ladite unité de commande (15) étant conçue pour exécuter un cycle de nettoyage en commutant les moyens de nettoyage d'une condition active à une condition de désactivation pendant une période de temps prédéterminée.

8. Four (1) selon la revendication 7, **caractérisé en ce que** l'unité de commande (15) est conçue pour exécuter un cycle de nettoyage après passage des moyens de génération (7) de chaleur de l'état actif à l'état de désactivation lorsque la valeur de température mesurée est supérieure au troisième seuil de température (TS3) ; ladite unité de commande (15) étant de plus conçue pour à nouveau comparer la valeur de température mesurée à un quatrième seuil de température (TS4) substantiellement égal au troisième seuil de température (TS3) ; ladite unité de commande (15) étant conçue pour :
exécuter un autre cycle de nettoyage si la valeur de température mesurée (TR) est supérieure au quatrième seuil de température (TS4) ;
exécuter les opérations du cycle initial si la valeur de température mesurée est inférieure au quatrième seuil de température (TS4).

9. Four (1) selon la revendication 8, **caractérisé en ce que** le quatrième seuil de température (TS4) est inférieur au troisième seuil de température (TS3) par une valeur d'écart (VS) de réglage de chaleur prédéterminée.

10. Four (1) selon la revendication 8 ou 9, **caractérisé en ce que**, dans l'état actif, les moyens de génération (7) de chaleur peuvent être configurés dans une pluralité de stades intermédiaires ; chaque stade intermédiaire étant défini par une production respective d'une quantité prédéterminée de chaleur ; ladite unité de commande (15) étant conçue pour enregistrer dans un registre de mémoire historique (23) les valeurs de température mesurées (TR) et, si la valeur de température mesurée (TR) est inférieure au quatrième seuil de température (TS4), pour commuter les moyens de génération (7) de chaleur à l'un des stades intermédiaires selon la tendance d'augmentation ou de diminution des valeurs de température historiques précédemment enregistrées de sorte à commuter les moyens de génération (7) de chaleur à un stade avec la chaleur étant plus ou moins supérieure à la chaleur précédente avant l'exécution du cycle initial.

11. Procédé servant à contrôler un four de cuisson (1) alimenté en granulés (11) comprenant une chambre de cuisson (4) d'aliments et une chambre de chauffage (5) dans laquelle sont introduits des moyens de génération (7) de chaleur à granulés (11) pouvant être configurés au moins entre une condition active et une condition de désactivation ; ledit procédé étant **caractérisé en ce qu'**il comprend, avant de mettre la nourriture dans la chambre de cuisson (4), les étapes de fonctionnement suivantes :
configurer les moyens de génération (7) de chaleur dans la condition active ; mesurer la température dans la chambre de cuisson (4) ;
comparer la valeur de température mesurée (TR) à un premier seuil de température (TS1) étant une première valeur prédéterminée (V1) inférieure à une valeur de température préétablie (TI) par un utilisateur ;
maintenir les moyens de génération (7) de chaleur dans la condition active au moins jusqu'à ce que le premier seuil de température (TS1) soit atteint ;
comparer la valeur de température mesurée (TR) à un second seuil de température (TS2) étant une seconde valeur prédéterminée (V2) supérieure à la valeur de température préétablie (TI) ;
maintenir les moyens de génération (7) de chaleur dans la condition active au moins jusqu'à ce que le second seuil de température (TS2) soit atteint ;
générer un flux d'air de refroidissement dans la chambre de chauffage (5) à travers des moyens de refroidissement (21) fonctionnellement reliés à l'unité de commande (15) et associés fonctionnellement à la chambre de chauffage (5) si la valeur de température mesurée (TR) est supérieure au second seuil de température (TS2) ;
l'étape consistant à générer un flux d'air de refroidissement étant actionnée à travers une vanne (22) interposée entre la chambre de chauffage (5) et l'environnement extérieur et pouvant être configurée entre une condition d'ouverture et une condition de fermeture de manière à ce que pendant la condition d'ouverture de la vanne (22), la chambre de chauffage (5) est en communication fluidique avec l'extérieur pour capter de l'air provenant du milieu environnant ayant une température inférieure à celle du four (1) ; ladite activation des moyens de refroidissement (21) permet à la vanne (22) de passer de la condition de fermeture à la condition d'ouverture.
